# EUROPEAN PATENT APPLICATION

(11) **EP 2 743 137 A1**
(43) Date of publication of application: **18.06.2014**
(21) Application number: 13197612.8
(22) Date of filing: 17.12.2013
(51) Int. Cl.: B60R 13/02, B60R 7/04

(54) **Movable interior trim component having a retaining feature**

(30) Priority: 17.12.2012 US 201261738249 P; 12.12.2013 US 201314104118
(71) Applicant: Johnson Controls Technology Company, Holland, MI 49423 (US)
(72) Inventor: Sherburn, Kenneth D., Grandville, MI Michigan 49418 (US)
(74) Representative: Finger, Catrin

(57) **Abstract**

An interior trim component includes an engagement feature 44 configured to engage a track of a support structure to facilitate movement of the interior trim component in a direction of travel 54 from an exposed position to a concealed position relative to the support structure. The interior trim component also includes a substrate 46 coupled to the engagement feature and having an outer surface 50 configured to face an interior of a vehicle. In addition, the interior trim component includes a retaining feature 41, 64 extending upwardly from the outer surface. The retaining feature is positioned adjacent to a leading edge 58 of the interior trim component relative to the direction of travel, and the retaining feature is configured to engage an object adjacent to the outer surface to block movement of the object relative to the interior trim component.

## Description

### CROSS REFERENCE TO RELATED APPLICATION

This application claims priority from and the benefit of U.S. Provisional Patent Application Serial No. 61/738,249, entitled "FLEXIBLE INTERIOR TRIM COMPONENT HAVING A RETAINING FEATURE", filed December 17, 2012, which is hereby incorporated by reference in its entirety.

### BACKGROUND

The invention relates generally to vehicle interior trim components, and more specifically, to a movable interior trim component having a retaining feature.

Vehicle storage compartments may be positioned throughout an interior of a vehicle to store cargo and other small items. For example, an overhead console may include a storage compartment suitable for storing sunglasses, driving glasses, or other items. Other storage compartments may be located within a center console, an armrest, seats, door panels, or other areas of the vehicle interior. Certain storage compartments include a door configured to secure the contents of the compartment and/or to hide the contents from view.

While a variety of door configurations may be employed, tambour doors are generally well-suited for storage compartments having curved openings. Typical tambour doors include a series of interlocked parallel ribs or segments that may rotate with respect to one another. In this manner, the tambour door may flex in a direction perpendicular to the orientation of the parallel segments. Such a configuration may enable the tambour door to match the contours of the curved storage compartment opening, thereby facilitating movement of the tambour door with respect to the storage compartment opening. Unfortunately, if an object (e.g., business card, coin, etc.) is placed on the tambour door, and the tambour door is transitioned to an open position, the object may fall into the internal structure of the storage compartment. Removal of the object from the internal structure (e.g., via disassembly of the storage compartment) may be an expensive and time-consuming process.

### BRIEF DESCRIPTION OF THE INVENTION

In one embodiment, an interior trim component includes an engagement feature configured to engage a track of a support structure to facilitate movement of the interior trim component in a direction of travel from an exposed position to a concealed position relative to the support structure. The interior trim component also includes a substrate coupled to the engagement feature and having an outer surface configured to face an interior of a vehicle. In addition, the interior trim component includes a retaining feature extending upwardly from the outer surface. The retaining feature is positioned adjacent to a leading edge of the interior trim component relative to the direction of travel, and the retaining feature is configured to engage an object adjacent to the outer surface to block movement of the object relative to the interior trim component.

In another embodiment, an interior trim component includes multiple substantially parallel ribs configured to engage a track of a support structure to facilitate movement of the interior trim component in a direction of travel from an exposed position to a concealed position relative to the support structure. The interior trim component also includes a substrate coupled to the substantially parallel ribs such that the interior trim component is capable of bending in a longitudinal direction substantially perpendicular to an orientation of the substantially parallel ribs. In addition, the interior trim component includes a retaining feature extending upwardly from an outer surface of the substrate. The retaining feature is positioned adjacent to a leading edge of the interior trim component relative to the direction of travel, and the retaining feature is configured to engage an object adjacent to the outer surface to block movement of the object relative to the interior trim component.

In a further embodiment, a vehicle interior assembly includes a support structure and an interior trim component movably coupled to the support structure. The interior trim component includes an engagement feature configured to engage a track of the support structure to facilitate movement of the interior trim component in a direction of travel from an exposed position to a concealed position relative to the support structure. The interior trim component also includes a substrate coupled to the engagement feature and having an outer surface configured to face an interior of a vehicle. In addition, the interior trim component includes a retaining feature extending upwardly from the outer surface. The retaining feature is concealed within the support structure while the interior trim component is in the exposed position, the concealed position, or a position therebetween, and the retaining feature is configured to engage an object adjacent to the outer surface of the substrate to retain the object adjacent to the outer surface as the interior trim component moves between the exposed position and the concealed position.

### DRAWINGS

FIG. 1 is a perspective view of an exemplary vehicle that may include one or more storage compartments each having a flexible tambour door.
FIG. 2 is a perspective view of an exemplary center console that may be located within an interior of the vehicle of FIG. 1.
FIG. 3 is a perspective view of the center console of FIG. 2 with a flexible tambour door in an open position.
FIG. 4 is a perspective view of an embodiment of a flexible tambour door having a retaining feature configured to block movement of an object relative to the flexible tambour door.
FIG. 5 is a perspective view of another embodiment of a flexible tambour door having a retaining feature formed from a series of protrusions.

### DETAILED DESCRIPTION

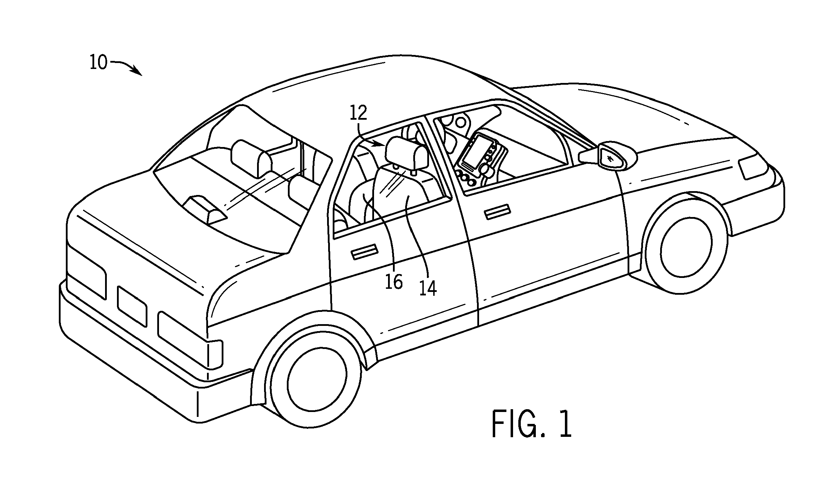

FIG. 1 is a perspective view of an exemplary vehicle 10, including an interior 12 having seats 14 and a center console 16. As discussed in detail below, the center console 16 and/or other vehicle interior assemblies may include an interior trim component, such as a flexible door enclosing a storage compartment. For example, certain storage compartments may employ a flexible tambour door having multiple substantially parallel ribs. These ribs may be configured to engage a track, thereby facilitating movement of the tambour door along an opening of the storage compartment. The tambour door may also include a cushion having a rear surface facing an interior of the storage compartment, and a show surface (e.g., formed from an integral outer skin) facing the interior 12 of the vehicle 10. Alternatively, an outer surface of the cushion may be wrapped with a cover layer to form the show surface of the flexible tambour door. The rear surface may be coupled to the substantially parallel ribs such that the tambour door may flex in a longitudinal direction substantially perpendicular to the orientation of the substantially parallel ribs. Such a configuration may enable the tambour door to match the contours of a curved storage compartment opening, thereby facilitating movement of the tambour door with respect to the storage compartment opening.

In certain embodiments, the tambour door includes a retaining feature extending upwardly from the outer surface (e.g., the show surface) of the tambour door. The retaining feature is configured to engage an object adjacent to the outer surface to block movement of the object relative to the tambour door. Accordingly, when the tambour door is transitioned to an open position, the possibility of the object falling into a structure surrounding the tambour door is substantially reduced or eliminated. In addition, the retaining feature may direct the object toward the opening as the tambour door transitions to the closed position, thereby enabling the occupant to retrieve the object.

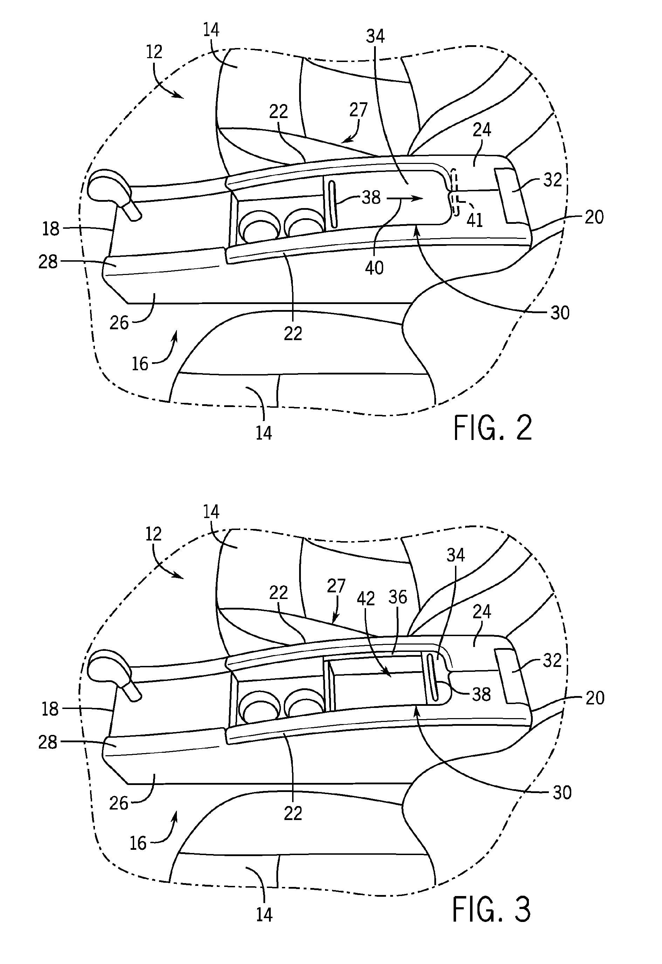

FIG. 2 is a perspective view of an exemplary center console 16 that may be located within an interior of the vehicle shown in FIG. 1. As discussed in detail below, the center console 16 may include a storage compartment enclosed by a flexible tambour door. As illustrated, the console 16 is coupled to a floor of the vehicle interior 12 between a driver seat 14 and a passenger seat 14. In the present configuration, the console 16 is configured to provide a storage area and an armrest for an occupant of one or both seats 14. The console 16 is generally prismatic, having a front wall 18, a rear wall 20, two opposed and generally symmetrical side walls 22 and a top surface 24.

The console 16 also includes two side panels 26 which form a support structure 27. In the present configuration, each side panel 26 provides one of the side walls 22 of the console 16 and portions of the rear wall 20, the front wall 18 and the top surface 24. As illustrated, the side walls 22 include a compound-curved upper contour having both convex and concave portions, thereby transitioning between the raised rear wall 20 and the lower front wall 18. The top edges 28 of the side panels 26 form the curved top surface 24. The top surface 24 includes an opening 30 that enables an occupant to access an interior of the console 16. In certain configurations, the console 16 includes a rear panel 32 forming a portion of the rear wall 20 and/or the top surface 24.

In the present configuration, the console 16 includes a door 34 movably coupled to the support structure 27 and configured to transition between an open/concealed position and the illustrated closed/exposed position. As illustrated, with the door 34 in the closed/exposed position, a substantial portion of the door 34 is exposed to the interior 12 of the vehicle 10. The door 34 includes a handle 38 that enables an occupant to slide the door 34 between positions. As discussed in detail below, sliding the door 34 toward the open/concealed position in a direction of travel 40 exposes an interior of a storage compartment located within the console 16. In certain embodiments, the door 34 is a tambour door having a series of substantially parallel ribs coupled to a substrate. The ribs are configured to engage a track within the side walls 22, while the substrate enables the door 34 to flex and to accommodate the contours of the opening 30. In certain embodiments, the substrate includes a cushion configured to enable the door 34 to serve as an armrest for the vehicle occupants, thereby reducing the space associated with providing a separate door 34 and armrest.

In the illustrated embodiment, the door 34 includes a retaining feature 41 extending upwardly from an outer surface of the door. The retaining feature 41 is configured to engage an object adjacent to the outer surface to retain the object as the door 34 moves between the closed/exposed position and the open/concealed position. The retaining feature is also configured to direct the object toward the opening 30 as the door 34 moves between the open/concealed position and the closed/exposed position. As illustrated, the retaining feature 41 is concealed within the support structure 27 of the center console 16. As a result, the retaining feature 41 may not be visible to an occupant within the vehicle interior 12, thereby enhancing the appearance of the center console 16. In certain embodiments, the retaining feature 41 is concealed within the support structure 27 while the door 34 is in the closed/exposed position, the open/concealed position, and each position therebetween.

While the present tambour door is described herein with reference to the center console 16, it should be appreciated that other vehicle interior assemblies (e.g., positioned throughout the interior 12 of the vehicle 10) may employ similar tambour doors. For example, a storage compartment located within an overhead console, door panel, instrument panel, or other region of the interior 12 may include a flexible tambour door. Furthermore, other flexible interior trim components, in addition to the doors described herein, may include a retaining feature configured to engage an object adjacent to an outer surface to block movement of the object relative to the interior trim component. Moreover, while flexible interior trim components are described here, it should be appreciated that substantially rigid interior trim components having a retaining feature may be utilized in alternative embodiments.

FIG. 3 is a perspective view of the center console 16 of FIG. 2 with the flexible tambour door 34 in an open position. As illustrated, the side walls 22 include rails or tracks 36 configured to facilitate movement of the door 34 in the direction 40. In certain configurations, the tracks 36 include a C-shaped cross section, and may be coupled to the side panels 26 or integrally formed within the side panels 26. As discussed in detail below, the substantially parallel ribs of the tambour door 34 include protrusions which engage the tracks 36 and support the door 34, while the attached substrate enables the door 34 to flex, thereby accommodating the contours of the opening 30. As illustrated, transitioning the door 34 to the open/concealed position exposes an interior 42 of the storage compartment within the center console 16. In addition, with the door 34 in the open/concealed position, a substantial portion of the door 34 is concealed within the support structure 27 (e.g., not visible to an occupant within the vehicle interior 12). Furthermore, the retaining feature 41 may remain concealed within the support structure 27 as the door 34 moves between the closed/exposed position and the open/concealed position.

As will be appreciated, a vehicle occupant may close the door 34 by grasping the handle 38 and moving the door 34 toward the front wall 18 of the center console 16. As the door 34 moves from the open/concealed position to the closed/exposed position, an object retained by the retaining feature 41 may be directed toward the opening 30, thereby enabling an occupant to retrieve the object. With the door 34 in the closed/exposed position, access to the interior 42 of the storage compartment is blocked, thereby enabling the storage compartment to retain items.

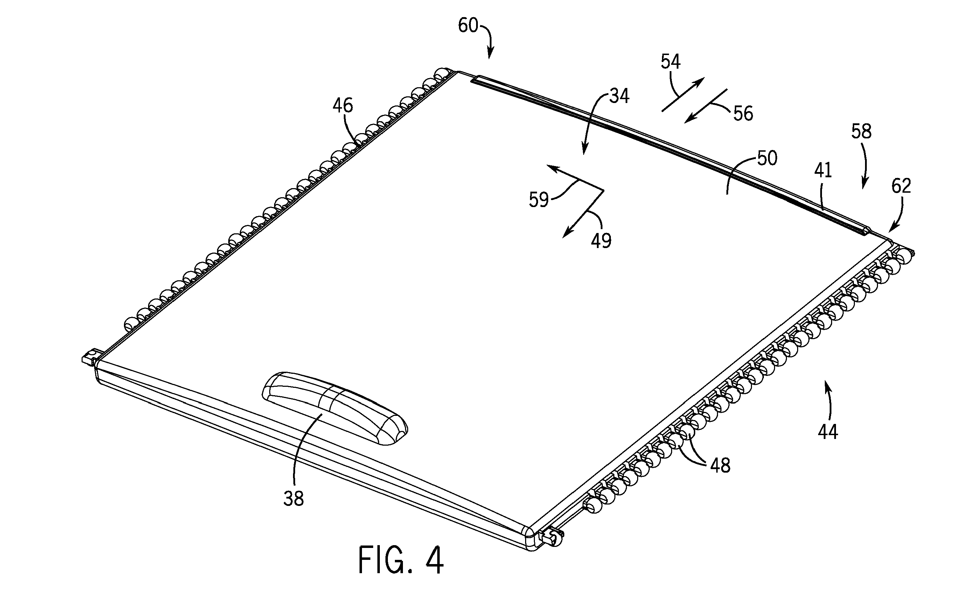

FIG. 4 is a perspective view of an embodiment of a flexible tambour door having a retaining feature configured to block movement of an object relative to the flexible tambour door. As illustrated, the flexible door 34 includes multiple substantially parallel ribs 44 coupled to a substrate, such as the illustrated padded substrate or cushion 46. The ribs 44 are configured to engage the tracks 36 of the support structure 27 to support the door 34 and to facilitate movement of the door 34 across the opening 30. In the illustrated embodiment, the ribs 44 include protrusions 48 configured to interlock with a corresponding recess within each track 36. The ribs 44 are coupled to a rear surface of the cushion 46 facing the interior 42 of the console 16, thereby forming a unitary structure. In this configuration, the door 34 may flex in a longitudinal direction 49 substantially perpendicular to the orientation of the substantially parallel ribs 44, thereby enabling the tambour door to match the contours of a curved storage compartment opening. In certain embodiments, the cushion 46 includes an integral outer skin that forms an outer surface/show surface 50 and provides a smooth, consistent appearance to the outer surface of the flexible door 34. In addition, a cover layer may be disposed about the integral outer skin to establish a show surface having a desired appearance and/or texture. In alternative embodiments, the cover layer may be disposed about a cushion that does not includes an integral outer skin.

The ribs 44 may be formed by an injection molding process, and may therefore be composed of any suitable material for injection molding. For example, the ribs 44 may be composed of a thermoplastic polymer, such as polyamide, polycarbonate, or acrylonitrile butadiene styrene. It should be appreciated that the ribs 44 may be composed of other materials suitable for injection molding in alterative embodiments. In addition, the ribs 44 may include a chemical blowing agent and/or any other suitable additives.

In certain embodiments, the cushion 46 is formed by a molding process in which two reactive foam compounds are mixed and poured into an open mold having the desired shape of the cushion 46. The mold is then closed and the mixture is allowed to expand and cure. By placing the ribs 44 into the mold prior to pouring the foam, the foam bonds to the ribs 44 during the curing process. As a result, a unitary flexible component is formed. In certain embodiments, material chemistry as well as temperature variations within the mold induce a high density flexible outer skin to form on the outer surface of the low density foam cushion. The resulting cushion 46 has a substantially smooth or textured integral outer skin, while providing sufficient flexibility to enable the tambour door 34 to accommodate the contours of the curved storage compartment opening 30. A layer of paint may be applied to the mold before the foam compounds are injected. The paint bonds with the foam adjacent to the inner surface of the mold, thereby establishing a desired color of the flexible outer skin. For example, the color of the outer skin may be selected to match the color of a fabric seat covering.

In other embodiments, various foam compounds and/or temperatures may be used that substantially reduce or eliminate the possibility of forming the high density flexible outer skin on the outer surface of the low density foam cushion. In such embodiments, the entire cushion 46 may have a substantially uniform low density. In addition, a cover layer may be disposed about the foam cushion to establish a show surface having a desired appearance and/or texture. The cover layer may be disposed about a foam cushion having the integral outer skin and/or a foam cushion having a substantially uniform low density.

While the illustrated door 34 includes substantially parallel ribs 44 to engage the tracks of the support structure, it should be appreciated that other engagement features may be utilized in alternative embodiments. For example, in certain embodiments, the door may be substantially rigid and include linear rails extending along opposite lateral sides of the door. The rails may engage the tracks of the support structure to facilitate movement of the door between the open/concealed position and the closed/exposed position. In further embodiments, the door may include a combination of rails and substantially parallel ribs, and/or any other suitable engagement feature(s) configured to engage the tracks of the support structure.

As previously discussed, the flexible door 34 may include a handle 38 configured to facilitate movement of the door 34 between the open/concealed position and the closed/exposed position. The handle may be attached to the door 34 by fasteners (e.g., bolts, screws, etc.) or injection molded along with the ribs 44. In configurations in which the handle is formed by injection molding, the foam may be poured over the plastic handle to establish a consistent appearance, or poured around the handle to provide a firm gasping surface. As will be appreciated, alternative embodiments may employ other components (e.g., knobs, recesses, etc.) in place of the handle to control movement of the door 34. For example, certain embodiments may include a handle formed by establishing a depression or recess into the cushion 46.

In the illustrated embodiment, the retaining feature 41 extends upwardly from the show surface 50 of the tambour door 34. The retaining feature 41 is configured to engage an object in contact with the show surface to block movement of the object relative to the tambour door. For example, without the retaining feature, placing an object (e.g., business card, coin, etc.) on the tambour door, and then sliding the tambour door in a direction 54 to the open/concealed position enables the object to fall within the internal structure of the center console. However, the retaining feature 41 is configured to block downward movement of the object while the tambour door is in the open/concealed position, thereby substantially reducing or eliminating the possibility of the object falling into the center console structure. The retaining feature 41 also directs the object toward the opening as the tambour door slides in a direction 56 to the closed/exposed position, thereby enabling the occupant to retrieve the object.

In the illustrated embodiment, the retaining feature 41 is positioned adjacent to a leading axial end 58 of the tambour door 34 (i.e., the leading end relative to the direction of movement 54). However, it should be appreciated that the retaining feature 41 may be positioned within other regions of the tambour door show surface in alternative embodiments. Furthermore, in the illustrated embodiment, the retaining feature 41 continuously extends in a lateral direction 59 (e.g., substantially perpendicular to the longitudinal direction 49 and/or substantially perpendicular to the directions of movement 54 and 56) from a first lateral end 60 of the tambour door to a second lateral end 62 of the tambour door. Because the retaining feature is substantially continuous, the possibility of an object passing through the retaining feature is substantially reduced or eliminated. Moreover, it should be appreciated that the height of the retaining feature 41 may be particularly selected to block movement of objects placed on the show surface of the tambour door. In certain embodiments, the retaining feature 41 may be configured to contact a corresponding feature of the center console to establish a seal that further reduces the possibility of objects falling into the center console interior structure.

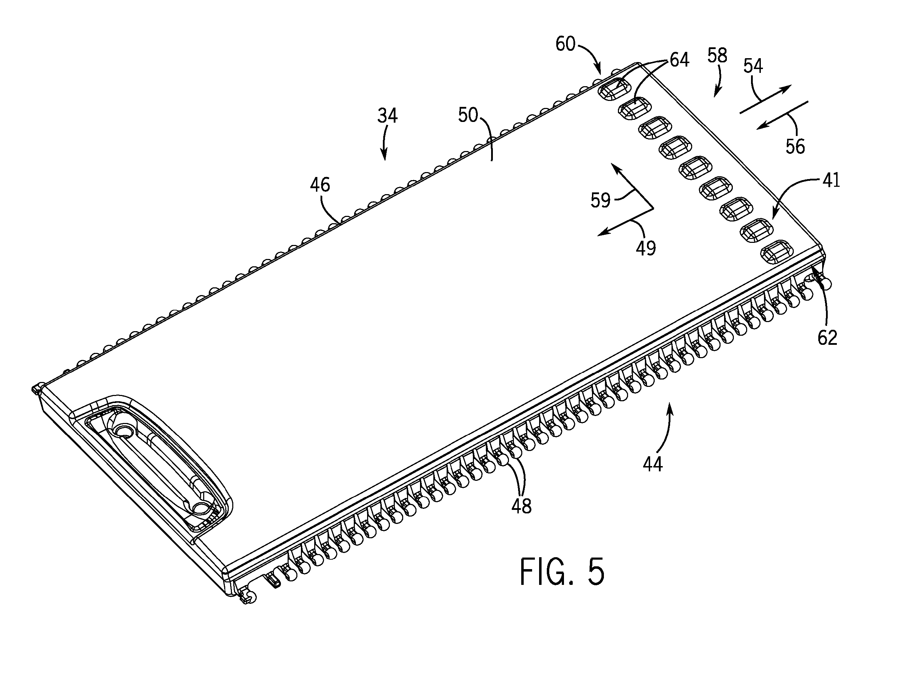

FIG. 5 is a perspective view of another embodiment of a flexible tambour door having a retaining feature formed from a series of protrusions. As illustrated, the retaining feature 41 includes a series of protrusions 64 extending along the show surface of the tambour door 34 in the lateral direction 59 from the first lateral end 60 to the second lateral end 62. Similar to the continuous retaining feature 41 of FIG. 4, the protrusions 64 are configured to engage an object in contact with the show surface to block movement of the object relative to the tambour door. While the protrusions 64 are positioned adjacent to the leading axial end 58 of the tambour door in the illustrated embodiment, it should be appreciated that the protrusions may be positioned within other regions of the tambour door show surface in alternative embodiments. Furthermore, the size, shape, and/or number of protrusions may be particularly selected to effectively block objects from falling into the interior center console structure. Moreover, in certain embodiments, each protrusion is configured to engage a corresponding recess within the center console, thereby establishing a seal that further reduces the possibility of objects falling into the center console interior structure.

In certain embodiments, the retaining feature 41 (e.g., the continuous retaining feature of FIG. 4 or the protrusions 64 of FIG. 5) may be an integral element of the cushion 46 (e.g., integrally formed with the cushion). In such embodiments, the retaining feature 41 may be formed during the cushion molding process (e.g., via a mold cavity shaped to form the retaining feature 41). For example, if the cushion molding process is configured to form a cushion having an integral outer skin, the integral outer skin may form the show surface of the retaining feature. Alternatively, if the cushion is wrapped with a cover layer, one or more projections extending from the cushion may deflect the cover layer to form the retaining feature 41. In further embodiments, a separate structure (e.g., plastic element) may be coupled to the cushion to form the retaining feature 41.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. It is, therefore, to be understood that the appended claims are intended to cover all such modifications and changes as fall within the true spirit of the invention. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. An interior trim component, comprising:
an engagement feature configured to engage a track of a support structure to facilitate movement of the interior trim component in a direction of travel from an exposed position to a concealed position relative to the support structure;
a substrate coupled to the engagement feature and having an outer surface configured to face an interior of a vehicle; and
a retaining feature extending upwardly from the outer surface, wherein the retaining feature is positioned adjacent to a leading edge of the interior trim component relative to the direction of travel, and the retaining feature is configured to engage an object adjacent to the outer surface to block movement of the object relative to the interior trim component.

2. The interior trim component of claim 1, wherein the interior trim component is configured to block access to a storage compartment of the support structure while in the exposed position, and to facilitate access to the storage compartment while in the concealed position.

3. The interior trim component of claim 1, wherein the substrate comprises a cushion, and the engagement feature comprises a plurality of substantially parallel ribs coupled to a rear surface of the cushion.

4. The interior trim component of claim 3, wherein the retaining feature is integrally formed with the cushion.

5. The interior trim component of claim 1, wherein the retaining feature continuously extends along a lateral direction substantially perpendicular to the direction of travel.

6. The interior trim component of claim 1, wherein the retaining feature comprises a plurality of protrusions extending along a lateral direction substantially perpendicular to the direction of travel.

7. The interior trim component of claim 1, comprising a handle configured to facilitate movement of the interior trim component between the exposed and concealed positions.

8. A vehicle interior assembly, comprising:
a support structure; and
an interior trim component movably coupled to the support structure, wherein the interior trim component comprises:
an engagement feature configured to engage a track of the support structure to facilitate movement of the interior trim component in a direction of travel from an exposed position to a concealed position relative to the support structure;
a substrate coupled to the engagement feature and having an outer surface configured to face an interior of a vehicle; and
a retaining feature extending upwardly from the outer surface, wherein the retaining feature is concealed within the support structure while the interior trim component is in the exposed position, the concealed position, or a position therebetween, and the retaining feature is configured to engage an object adjacent to the outer surface of the substrate to retain the object adjacent to the outer surface as the interior trim component moves between the exposed position and the concealed position.

9. The vehicle interior assembly of claim 8, wherein the substrate comprises a cushion, and the engagement feature comprises a plurality of substantially parallel ribs coupled to a rear surface of the cushion.

10. The vehicle interior assembly of claim 9, wherein the retaining feature is integrally formed with the cushion.

11. The vehicle interior assembly of claim 8, wherein the interior trim component is configured to block access to a storage compartment of the support structure while in the exposed position, and to facilitate access to the storage compartment while in the concealed position.

12. The vehicle interior assembly of claim 8, wherein the retaining feature continuously extends along a lateral direction substantially perpendicular to the direction of travel.

13. The vehicle interior assembly of claim 8, wherein the retaining feature comprises a plurality of protrusions extending along a lateral direction substantially perpendicular to the direction of travel.

14. The vehicle interior assembly of claim 8, wherein the retaining feature is positioned adjacent to a leading edge of the interior trim component relative to the direction of travel.
